# EUROPEAN PATENT SPECIFICATION

(11) **EP 3 068 510 B1**
(45) Date of publication and mention of the grant of the patent: **11.09.2019**
(21) Application number: 13895964.8
(22) Date of filing: 22.10.2013
(51) Int. Cl.: B01D 3/08, B01D 53/14, B01D 53/18, B01D 53/40, B01D 53/48, B01D 53/52, B01D 53/62, B01D 53/78, B01D 53/96

(54) **SYSTEM AND PROCESS FOR ABSORPTION AND DESORPTION OF CO2**
SYSTEM UND VERFAHREN ZUR ABSORPTION UND DESORPTION VON CO2
SYSTÈME ET PROCÉDÉ POUR L'ABSORPTION ET LA DÉSORPTION DE CO2

(43) Date of publication of application: 21.09.2016
(73) Proprietor: Compact Carbon Capture AS, 5006 Bergen (NO)
(72) Inventor: FIVELAND, Torbjørn, NO-3721 Skien (NO); ANDERSEN, Henrik Solgaard, NO-3151 Tolvsrød (NO)
(74) Representative: J A Kemp
(86) International application number: PCT/NO2013/050178
(87) International publication number: WO 2015/060723

(56) References cited:
- EP-A2- 0 084 410
- WO-A1-2012/076657
- WO-A1-2012/092981
- US-A- 2 176 982
- US-A1- 2004 265 199
- US-A1- 2011 131 937

## Description

The present invention relates to a system and a process for absorption and desorption of CO₂.

A standard design of a plant used for carbon dioxide removal from a gas stream such as a flue gas or natural gas comprises a blower either before or after an indirect or direct contact cooler to boost the gas pressure, a separate boiler, followed by a cooler for the gas before the carbon dioxide is removed in an absorption column where the gas is contacted counter-currently to an absorbent flowing downwards. In the top of the column a wash section is fitted to remove, essentially with water, remnants of absorbent following the flue gas from the CO₂ removal section.

The known plants and processes for removing CO₂ from a gas stream involve equipment that causes a significant pressure drop in the gas.

Absorbent rich in CO₂ from the lower part of the absorber column is pumped to the top of a desorption column via a heat recovery heat exchanger rendering the rich absorbent pre-heated before entering the desorption tower. The absorbent rich in CO₂ is introduced at the top and is stripped by steam moving up the tower. Steam and absorption liquid following CO₂ over the top is recovered in a condenser over the desorber top. Vapour is then formed in a reboiler from where the absorption liquid lean in CO₂ is pumped via a heat recovery heat exchanger and a cooler to the top of the absorption column.

Thus, conventional plants consists of very large units comprising a large number of process equipment and require instrumentation and control, in addition to a complex piping system to connect the various units.

A further problem is that there is a lot of energy and heat exchange involved with circulating large amounts of diluted absorbent through the absorption-desorption process. The amount of solution that has to be circulated is highly influenced by the concentration of absorbent that is used in the process. The higher the concentration the less diluent has to be heated, cooled and circulated. The factors that influence the applicable concentration is the viscosity of the solution, the corrosiveness of the solution, the solubility as well as other chemical and physical properties of the solution and the equipment to be used.

An object of at least the preferred embodiments of the present invention is to achieve a system and a process allowing the use of highly concentrated CO₂ absorption liquid in the CO₂ absorption and desorption process.

WO 2012/092981 A1 discloses background information.

The invention provides a system for accelerated absorption and desorption of CO₂ as defined in claim 1, and a process for accelerated absorption and desorption of CO₂ as defined in claim 10.

By using centrifugal effect due to rotation both in the absorber and the desorber it is achieved that the system can handle very viscous solutions. The centrifugal effect improves the efficiency and in both the absorber and the desorber and allows the use of very viscous and highly concentrated absorption liquid. The system is therefore significantly more efficient, up to 30% higher efficiency than conventional plants using standard MEA solutions.

Embodiments of the present invention utilize a high amine concentration, up to 95 % by weight, in particular an amine concentration of approximately 50-70% by weight, and the absorption liquid may have a viscosity of up to 1500 nPa·s.

This has the further effect that the amounts of circulated absorption liquid is significantly lower, and also the absorption circulation rate is lower. Also the need for heating and cooling large amounts of 15 diluents is therefore reduced.

Another advantage is that the retention times of solvents are short in both absorber and desorber and hence the oxidative and thermal degeneration of solvent is also reduced, thus the system and process provides an accelerated absorption and desorption of CO₂ in comparison to previous known processes. Both the absorber and the desorber are very compact and fewer elements are necessary to carry out the absorption of CO₂ and the regeneration of absorption liquid in the desorption process. Another advantage is that since the desorber is operated under pressure, the compressor investments is reduced in comparison to the conventional case. An operating pressure of 5 bara in the desorber gives that one CO₂ compressor stage can be omitted in the plant. The footprint (equipment size) and the investment costs for the system according to the invention is therefore significantly reduced in comparison to previously known plants.

Furthermore, the energy consumption for compression compared to standard capture processes (depending on the operational pressure in the desorber) amounts to almost 20% reduced energy consumption for an operational pressure of 3 bara, and an energy consumption reduced by almost 30% for an operation pressure of 5 bara in comparison to a design case where the operational pressure is 1.7 bara.

Other distinctive features and advantages with the invention will be evident in the dependent claims and the following detailed description of preferred embodiments of the invention.
Figure 1 schematically illustrates a system according to the invention.
Figure 2 schematically illustrates the absorber in detail.
Figure 3 schematically shows details of the absorber.
Figure 4 schematically illustrates the desorber in detail.

It should be noted that the figures only show details which are important for the understanding of the invention. Moreover, same features are indicated by the same reference number throughout the specification. It should also be noted that the illustrated apparatus and the features thereof are out of proportion in relation to each other and the indicated features and dimensions thereof are exaggerated. The features are shown in this manner for explanatory purposes only.

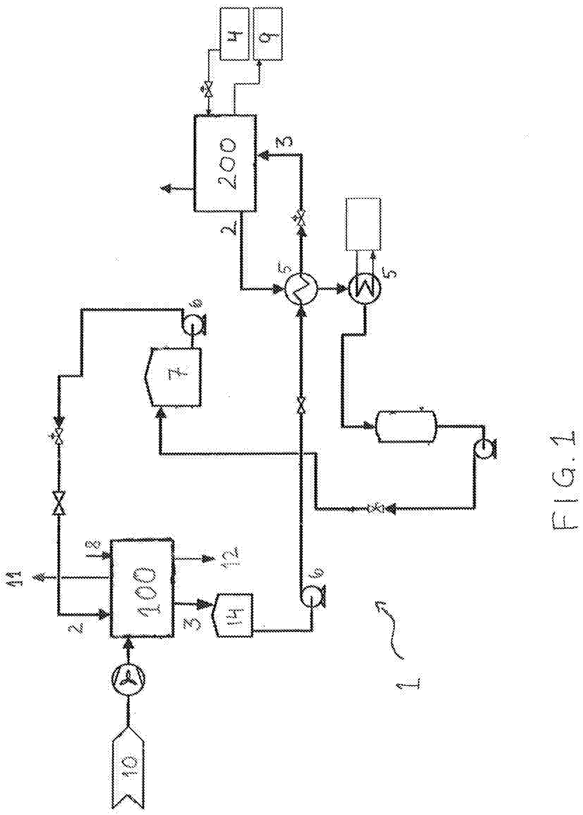

With reference to figure 1 a system 1 according to the invention is schematically illustrated.

The system shows an absorber 100, also referred to compact atmospheric rotating absorber (CARA) arranged to receive a gas stream 10 such as flue gas or exhaust gas and lean absorption liquid, also referred to as lean amine, to be used for the absorption process. A desorber 200 , also referred to as rotating desorber wheel (RDW 2.0) arranged to receive absorption liquid 3 rich in CO₂ and pressurized steam 4 to be used as heating medium in the desorption process where C02 is desorbed from the CO₂ rich absorption liquid 3 which is regenerated and leaves the desorber as lean absorption liquid (2). The system is further provided with conventional equipment such as compressors, heat exchanger 5 , fans, pumps 6, storage tanks 7,14 , pipes, tubes and fittings and similar to complete the system for the accelerated process of absorption and desorption of CO₂ according to the invention. These types of equipments are previously known and therefore not further described here.

The system and process according to the invention allows for using a high amine concentration, up to 95 % by weight, and in particular approximately 50-70% by weight.

The present invention is suitable to be used with absorption liquid comprising one of the following MEA, MDEA, DEA, or a mixture of different amines or other absorption liquids such as ionic liquid.

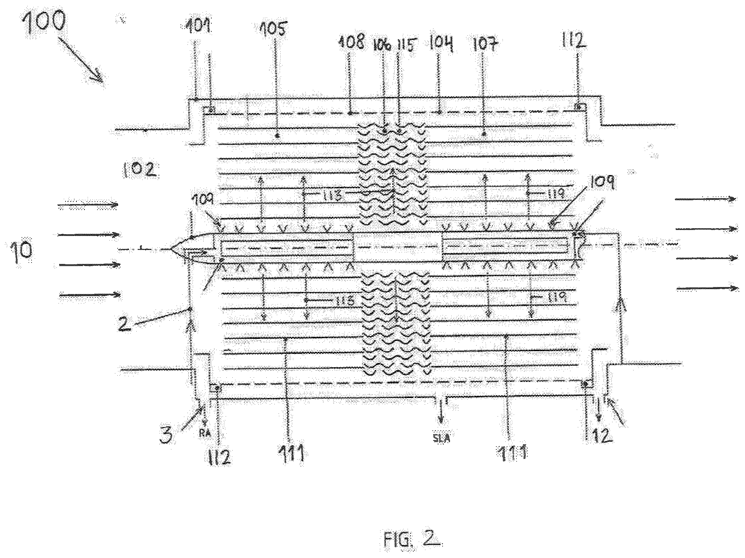

Fig. 2 shows the absorber 100 which is provided with a stationary casing 101 having a longitudinal axis and a gas stream inlet 102 and outlet. A gas stream 10 containing CO₂ is supplied to the gas stream inlet of the absorber.

The casing 101 encloses a rotatable main cylinder 104 which has an absorption section 105 , a demister section 106 and a washing section 107 arranged in series in direction of the gas flow. The mantle surface 108 of the main cylinder functions as the outer perimeter in the radial direction of each section. The absorption section 105 is provided with a plurality of spray means 109 arranged in the centre of the main cylinder. The spray means 109 are arranged to spray absorption liquid 14 into the gas stream 10 in the radial direction towards the perimeter of the main cylinder. Between the spray means and the perimeter of the main cylinder are means for disintegration 111 of the droplets provided to atomize the droplets and improve the turbulence inside the droplets thereby increasing the absorption efficiency. This is particularly important since the absorption liquid is very viscous and highly concentrated.

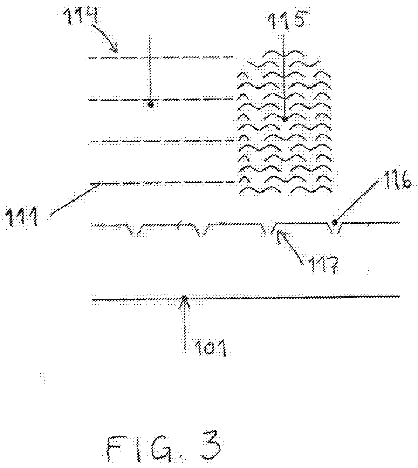

The droplet disintegration means 111 are formed as a plurality of rotatable cylinders of permeable material, such as densely perforated plates, which are perforated all around the circumference and along the whole length of the cylinder. The perforations 114 are shown in Figure 3.

The main cylinder 104 and the perforated cylinders 111 are coaxial and are arranged to rotate about the common longitudinal axis by mechanical driving means 112 of conventional type provided in the absorber. The means for disintegration of droplets comprises 3-50 or more coaxial cylinder which are arranged between the spray means and the mantle surface of the main cylinder. The cylinders are arranged such that the gas stream passes in the axial direction in between the cylinders and is treated by the absorption liquid droplets which are moved in cross-flow direction to the gas stream by aid of the centrifugal effect caused by the rotation of the cylinders. The distance between the cylinders is adapted such that the droplets of absorption liquid (113) are well exposed to the passing gas stream in order to achieve good absorption without blocking or hindering the gas stream.

The cylinders 111 are densely perforated such that the droplets pass through the perforations 114 by aid of centrifugal forces without forming a liquid layer on the inside surface of the perforated cylinder. Since the perforated cylinders rotate together with the main cylinder, the droplets are atomized and finely divided when passing through the perforations, thus very good mixing inside the droplets is achieved which improves the absorption of CO₂. The finely atomised absorption liquid droplets provide that large surfaces for mass transfer purpose are exposed to the passing flue gas comprising CO₂.

The average droplet size of absorption liquid decreases with the distance from the centre and the volume of gas between the cylinders increases further out from the hollow axle which allows for high level of absorption of CO₂ The absorption liquid collected at the perimeter of the main cylinder is thus rich in CO₂.

The perforated cylinders 111 are attached to the main cylinder 104 by conventional fastening means not shown in the figure but this may easily be done with use of appropriate stays, such that the main cylinder and the inner perforated cylinders rotate together about a common axis.

The absorber 100 is further provided with a demister section 106 arranged in the main cylinder directly after the absorption section. The demister section collects and removes remaining droplets of absorption liquid 113 in the treated gas stream 10. The demister is provided with a packed bed material 115, which is arranged to rotate together with the main cylinder. The treated gas stream 10 flows through the packed bed material 115 and droplets of absorption liquid 113 are moved by centrifugal force to the perimeter of the main cylinder.

The absorber 100 is further provided with a wash section 107 arranged in the main cylinder directly after the demister section 106. The wash section is arranged like the absorption section and has spray means 109 arranged in the centre for spraying wash liquid into the treated gas stream. The wash section is also provided with means for disintegration of droplets 111 comprising a plurality of rotatable perforated cylinders for atomizing the wash liquid droplets. The droplets are moved by aid of centrifugal force in a cross-flow direction through the gas stream and through the perforated cylinders such that the wash liquid droplets 119 absorb absorption liquid dissolved in the treated gas stream.

Optionally, there is also a further demister section arranged after the wash section such that all wash liquid is removed from the cleaned gas before the gas vented to the atmosphere.

The absorber 100 is operated at atmospheric pressure. Pressure drop is an important design parameter for atmospheric CO₂ capture. It is therefore preferred to install sufficient pressure generation (fans) at the gas inlet (not shown in the figures) have to overcome pressure drop throughout the absorber.

Rich absorption liquid RA, is collected at the perimeter of the main cylinder 104 and forms a liquid layer on the inside of the main cylinder surface. The main cylinder is provided with liquid outlets 116 , through holes in the mantle surface 104 where the collected liquid is discharged. The liquid outlets are distributed over the whole main cylinder surface such that both the absorption liquid and the wash liquid is collected and removed via the liquid outlets in respective sections.

The liquid outlets 116 arranged on the surface of the main cylinder may optionally be provided with energy recovering means. The energy recovery means comprises diffusers 117 connected to the liquid outlets 116. The diffusers 117 are formed such that the kinetic energy in the liquid layer collected and formed on the inside of the main cylinder is converted into hydrodynamic energy. The diffusers 117 are formed like short tubes with a decreasing cross - section and are directed towards the casing 101 enclosing the main cylinder. The hydrodynamic energy is used as hydrodynamic driving force to rotate the cylinder. This is advantageous in that less power is used by the means for rotating the absorber.

The system is further provided with a desorber 200 which is connected to the absorber 100 to receive CO₂ rich absorption liquid. The desorber 200 has a rotatable desorption cylinder 201 which is provided with a desorption chamber 202 and a steam chamber 203. The desorption cylinder 201 is also provided with an absorbent collection chamber 204 for collecting lean absorption liquid (2). The desorption cylinder is rotated by conventional drive means 205 arranged in a suitable manner.

The desorption chamber 202 and the steam chamber 203 are integrated in the desorption cylinder 201 to achieve a compact desorber 200. Efficient desorption is achieved without mixing the fluids, thus there is no exchange of substances or mass transfer between the fluids present in the chambers. The chambers are completely separated such that the chambers can be operated with different operating pressures. The system 1 can thus be used with highly pressurized fluids of up to 10 Bar which is advantageous in that energy consumption for desorption is reduced . By using an increased pressure of the released CO₂ the energy consumption for compression in the system 1 is also reduced.

The integrated design of the desorption cylinder 201 and the utilisation of centrifugal force created by rotation of the desorption cylinder to force the absorption liquid droplets through the gas stream results in that the desorber is more compact compared to a conventional column and reboiler design.

The desorption chamber 202 is provided with spray means 206 in the core region 209 close to the axis of rotation for spraying CO₂ rich absorption liquid 3 into the chamber. The chamber is further provided with a stripper unit 207 arranged between the core region 209 of the chamber and the perimeter 216 of the desorption cylinder 201.

The stripper unit 207 is formed as a rotatable tube bundle heat exchanger having a large number of tubes 208 which are attached to the desorption cylinder 201 and rotate together with the cylinder about a rotation axis.

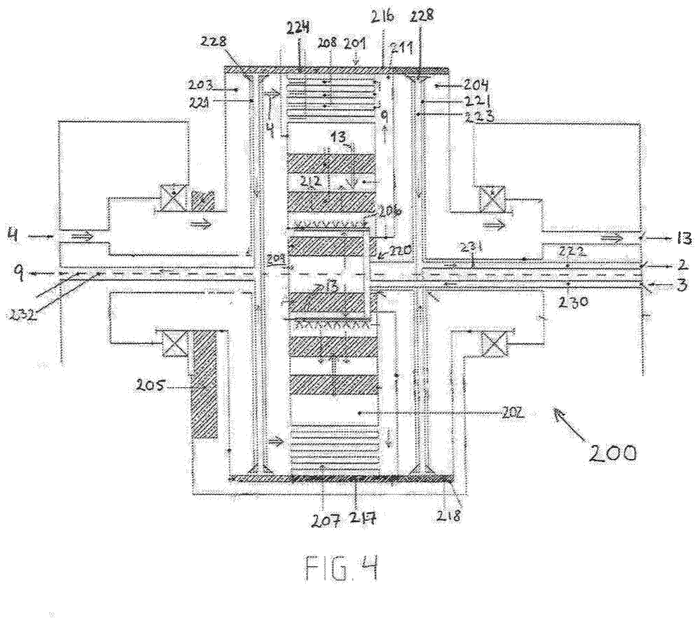

The steam chamber 203 is connected to the tubes 208 in the rotating tube bundle heat exchanger 207 such that heated steam 4 is supplied to the inside of the tubes from the steam chamber. The steam condenses in the tubes in the desorption process and the steam condensate 9 is returned via a steam condensate chamber 211 and steam condensate channels 224 (shown in the upper part of the desorption chamber illustrated in Fig. 4) to the steam chamber.

The absorption liquid droplets 212 are sprayed into the core of the desorption chamber 202 and moved by aid of centrifugal force through the tube bundle heat exchanger 207. The desorption process takes place on the outside surface of the tubes 208 where absorption liquid droplets 212 are indirectly heated and releases CO₂ and vapours 13. The desorption cylinder 201 is also provided with an absorbent collection chamber 204 for collecting lean absorption liquid 2. The lean absorption liquid 2 moves to the periphery 216 of the desorption chamber. Absorbent channels 217 (shown in the lower part of the desorption chamber in Fig. 4) are provided on the perimeter 216 of the desorption chamber and connects the desorption chamber 202 to the absorbent collection chamber 204. The lean absorption liquid 2 is transferred via the absorbent channels 217 to the absorbent collection chamber where the lean absorbent forms a layer 218 on the perimeter of the rotating desorption cylinder. CO₂ and vapours 13 released in the desorption process flows towards the core region 209 of the desorption chamber and preheats the absorption liquid droplets moving outwards. CO₂ is removed from the desorption chamber via an outlet 220 arranged in the core region of the desorption chamber.

The absorbent channels 217 and the condensate channels 224 are arranged all around the perimeter of the desorption cylinder.

The desorber is provided with means for recovery of kinetic energy in the liquid layer formed on the inside surface of the desorption cylinder in the absorbent collecting chamber 204. The absorbent collection chamber 204 is provided with the diffuser means 221 to remove the lean absorbent from the chamber. The diffuser means are formed of a plurality of stationary diffuser arms, which are connected to a lean absorbent outlet conduit 222 arranged along the axis of rotation of the desorption cylinder. Each diffuser arm 221 is formed like a hollow pipe 223 provided with a liquid inlet arranged in near proximity of the outer perimeter of the absorbent collection chamber. The liquid inlet 228 is funnel shaped and has a cross-section which decreases in the flow direction of the absorbent. The kinetic energy in the rotating layer 218 of the lean absorption liquid 2 is recovered and converted into hydrodynamic energy such as a pressure head. The pressure head has a pumping effect and the liquid is pumped out from the absorbent collection chamber to a storage tank by aid of this pumping effect. By using the diffuser means, at least a part of the supplied energy in order to rotate the desorption cylinder is recovered. Also investments in separate pumps can be avoided.

The steam chamber 203 is also provided with diffuser means 221 of the same type as in the absorbent collection chamber 204 for removing steam condensate 9 in the same manner from the desorber.

The desorption cylinder 201 is designed such that conduits 230,231 for supplying CO₂ rich absorption liquid 3 and removal of lean absorption liquid 2 are provided in the core region along the axis of rotation of the desorption cylinder, and also the conduit 232 for removing steam condensate 9 from the desorber is provided along the axis of rotation of the desorption cylinder 201. This design decreases the size of the desorber 200 and provides efficient liquid supply and removal systems and demands less energy and investments in pumps and other equipment. The regeneration of the CO₂ rich absorption liquid 3 results in a stream of lean absorption liquid 2 and a gas stream 13 of CO₂ and vapour.

The desorber 200 contributes to the steam consumption in the system by use of steam for heating of preheated rich amine to desorption exit temperature, heat for desorption of CO₂ and water vapor leaving the desorber together with CO₂. Trials indicate that the steam consumption of the desorber amounts to a 30% reduction in steam consumption compared to conventional CO₂ capture process cwhich implies less water vapor leaving with the CO₂. It should be noted that there is significantly reduced energy consumption for amine desorption due to compact equipment design and the use of highly concentrated absorption liquid, amine solution (70 wt% MEA in water). This will reduce steam consumption needed for CO₂ desorption by almost 30% compared to prior known processes using an amine solution of 30 wt% MEA in water amine.

Furthermore it should be noted that the operational pressure of the rotating desorber in the system can be significantly higher than for known desorption alternatives, due to the design of the system and the design of the desorber. Hence CO₂ compressor energy consumption post the desorption process and the subsequent pressurisation to the required level of 70 bar is less than for alternative strippers.

Furthermore, a system 1 according to the invention where the desorber 200 is operated at pressure of 3 bara reduces the compressor energy by almost 20% compared to a desorber of alternative type having operational pressure of 1.7 bara (no compressor steps avoided). In case the rotating desorber in the system according to the invention is operated at pressure of 5 bara the compressor energy is reduced by almost 30% compared to a desorber of different type having operational pressure of 1.7 bara.

The absorption liquid 2, 3 is circulated in the system. The system provides for efficient circulation of the absorption liquid, water, CO₂, and vapour. Heat exchangers and condensers of different types are used in various process steps for recovering heat and adjusting the operational parameters to achieve high energy efficiency of the system. Rich Amine from the absorber CARA is pumped via a storage tank to the desorber RDW 2.0. The rich amine flow which is fed to the desorber 200 is pre-heated by cooling warm desorbed lean amine 2 coming from the desorber 200, and then heated to desorber operating temperature by steam. The lean amine is further cooled by water to the desired temperature before it is pumped back to the lean amine storage tank 7 of the absorber
Warm gases, water vapour and CO₂, 13 from the gas outlet of the desorber are cooled and water separated in a gas/liquid separator. Energy can be recovered from this stream by condensing of water vapor. Released CO₂ is washed with water and is either sent to atmosphere or recycled to increase CO₂ concentration in the gas feed.

## Claims

1. A system for accelerated absorption and desorption of CO₂ comprising an absorber (100) for absorbing CO₂ from a gas stream (10) by use of absorption liquid and a desorber (200) for desorbing CO₂ from CO₂ rich absorption liquid, **characterized in that**
the absorber (100) comprises a rotatable main cylinder (104) having an absorption section (105) provided with rotatable means for disintegration of droplets (111) of absorption liquid and means for rotating (112) the absorber, such that absorption liquid droplets (113) are moved by aid of centrifugal force in a cross flow-direction in relation to the gas stream (10), so that the direction of the flow of absorption liquid droplets (113) is substantially orthogonal to the direction of the flow of the gas stream (10), and being atomized by the means for disintegration of droplets whereby CO₂ is absorbed from the gas stream by the absorption liquid droplets,
the desorber (200) is connected to the absorber to receive CO₂ rich absorption liquid,
the desorber (200) is rotatable and comprises a desorption chamber (202) provided with a rotatable heat exchanger (207) and means for rotating (205) the desorber, such that the absorption liquid droplets (212) are moved by aid of centrifugal force through the heat exchanger (207) whereby the absorption liquid droplets are heated and CO₂ is desorbed and separated from the absorption liquid droplets, and lean absorption liquid (2) is circulated to the absorber (100).

2. A system according to claim 1, wherein the means for disintegration of droplets (111) comprises a plurality of perforated rotating cylinders.

3. A system according to any preceding claim, wherein the desorber is provided with means for recovery of kinetic energy (221) in the lean absorption liquid (2) and/or steam condensate (9);
wherein the desorber is provided with stationary diffusers (221) arranged in an absorbent collection chamber (204) adapted to convert kinetic energy in the lean absorption liquid (2) into hydrodynamic energy; and/or
wherein the desorber is provided with stationary diffusers (221) arranged in a steam chamber (203) to convert kinetic energy in steam condensate (9) into hydrodynamic energy.

4. A system according to any preceding claim, wherein the main cylinder of the absorber has a demister section (106) arranged after the absorption section (105) which is adapted to remove droplets of absorption liquid (113) from the treated gas stream.

5. A system according to any preceding claim, wherein the main cylinder (104) of the absorber has a wash section (107) arranged after the demister section where wash liquid is sprayed into the gas stream, and provided with means for disintegration of droplets (111), and the wash liquid droplets (119) are moved by aid of centrifugal force in a cross-flow direction in relation to the gas stream, so that the direction of the flow of wash liquid droplets (119) is substantially orthogonal to the direction of the flow of the gas stream, whereby the wash liquid droplets absorb absorption liquid dissolved in the treated gas stream.

6. A system according to claim 5, wherein the main cylinder (104) of the absorber is provided with a demister section which is arranged after the wash section (107), and the demister section is adapted for removing droplets of wash liquid from the treated gas stream.

7. A system according to any preceding claim, wherein the desorber (200) comprises a steam chamber (203), and that the desorption chamber (202) and the steam chamber (203) are arranged such that absorption liquid (2,3) in the desorption chamber (202) and heating medium (4,9) in the steam chamber are not mixed in the desorber.

8. A system according to any preceding claim, the system being adapted to supply and remove absorption liquid (2,3) from the desorber along the axis of rotation of the desorption cylinder.

9. A system according to any the previous claims adapted to remove steam condensate (9) from the desorber along the axis of rotation of the desorption cylinder.

10. A process for accelerated absorption and desorption of CO₂ comprising the steps of:
- supplying a gas stream (10) containing CO₂ to an absorber (100) having a rotating main cylinder (104),
- spraying lean absorption liquid into the gas stream,
- moving absorption liquid droplets (113, 212) in a cross-flow direction to the gas stream by aid of centrifugal force so that the direction of the flow of absorption liquid droplets (113, 212) is substantially orthogonal to the direction of the flow of the gas stream,
- atomizing the droplets of absorption liquid (113) by means for disintegration of droplets (111),
- absorbing CO₂ from the gas stream (10) by absorption liquid droplets (113),
- circulating CO₂ rich absorption liquid (3) from the absorber to a rotating desorber (200) having a desorption chamber (202) provided with a rotating heat exchanger (207),
- spraying CO₂ rich absorption liquid in the desorption chamber (202),
- supplying steam (4) to the heat exchanger,
- moving droplets of absorption liquid (212) through heat exchanger (207) by aid of centrifugal force,
- desorbing CO₂ from absorption liquid,
- separating CO₂ from lean absorption liquid,
- circulating lean absorption liquid (2) from the desorber (200) to the absorber (100).

## Patentansprüche

1. System zur beschleunigten Absorption und Desorption von CO₂, umfassend einen Absorber (100) zum Absorbieren von CO₂ aus einem Gasstrom (10) durch Verwendung von Absorptionsflüssigkeit und einen Desorber (200) zum Desorbieren von CO₂ aus CO₂-reicher Absorptionsflüssigkeit, **dadurch gekennzeichnet, dass**
der Absorber (100) einen drehbaren Hauptzylinder (104) mit einem Absorptionsabschnitt (105) umfasst, der mit einem drehbaren Mittel zum Zerfall von Tropfen (111) von Absorptionsflüssigkeit und einem Mittel zum Drehen (112) des Absorbers derart bereitgestellt ist, dass die Absorptionsflüssigkeitstropfen (113) mithilfe von Zentrifugalkraft in einer Querströmungsrichtung in Bezug auf den Gasstrom (10) bewegt werden, sodass die Richtung der Strömung von Absorptionsflüssigkeitstropfen (113) im Wesentlichen orthogonal zur Richtung der Strömung des Gasstroms (10) ist, und durch das Mittel zum Zerfall von Tropfen zerstäubt werden, wodurch CO₂ aus dem Gasstrom durch die Absorptionsflüssigkeitstropfen absorbiert wird,
der Desorber (200) mit dem Absorber verbunden ist, um CO₂-reiche Absorptionsflüssigkeit aufzunehmen,
der Desorber (200) drehbar ist und eine Desorptionskammer (202) umfasst, die mit einem drehbaren Wärmetauscher (207) und einem Mittel zum Drehen (205) des Desorbers derart bereitgestellt ist, dass die Absorptionsflüssigkeitstropfen (212) mithilfe von Zentrifugalkraft durch den Wärmetauscher (207) bewegt werden, wodurch die Absorptionsflüssigkeitstropfen erwärmt werden und CO₂ desorbiert und von den Absorptionsflüssigkeitstropfen getrennt wird, und magere Absorptionsflüssigkeit (2) zum Absorber (100) zirkuliert wird.

2. System nach Anspruch 1, wobei das Mittel zum Zerfall von Tropfen (111) eine Vielzahl von perforierten rotierenden Zylindern umfasst.

3. System nach einem vorhergehenden Anspruch, wobei der Desorber mit einem Mittel zur Rückgewinnung von kinetischer Energie (221) in der mageren Absorptionsflüssigkeit (2) und/oder im Dampfkondensat (9) bereitgestellt ist;
wobei der Desorber mit stationären Diffusoren (221) bereitgestellt ist, die in einer Absorptionsmittelsammelkammer (204) angeordnet sind, die angepasst ist, um kinetische Energie in der mageren Absorptionsflüssigkeit (2) in hydrodynamische Energie umzuwandeln; und/oder
wobei der Desorber mit stationären Diffusoren (221) bereitgestellt ist, die in einer Dampfkammer (203) angeordnet sind, um kinetische Energie in Dampfkondensat (9) in hydrodynamische Energie umzuwandeln.

4. System nach einem vorhergehenden Anspruch, wobei der Hauptzylinder des Absorbers einen nach dem Absorptionsabschnitt (105) angeordneten Tropfenabscheiderabschnitt (106) aufweist, der angepasst ist, um Tropfen von Absorptionsflüssigkeit (113) aus dem behandelten Gasstrom zu entfernen.

5. System nach einem vorhergehenden Anspruch, wobei der Hauptzylinder (104) des Absorbers einen nach dem Tropfenabscheiderabschnitt angeordneten Waschabschnitt (107) aufweist, an dem Waschflüssigkeit in den Gasstrom gesprüht wird und der mit einem Mittel zum Zerfall von Tropfen (111) bereitgestellt ist, und die Waschflüssigkeitstropfen (119) mithilfe von Zentrifugalkraft in einer Querströmungsrichtung in Bezug auf den Gasstrom bewegt werden, sodass die Richtung der Strömung von Waschflüssigkeitstropfen (119) im Wesentlichen orthogonal zur Richtung der Strömung des Gasstroms ist, wodurch die Waschflüssigkeitstropfen Absorptionsflüssigkeit, die in dem behandelten Gasstrom gelöst ist, absorbieren.

6. System nach Anspruch 5, wobei der Hauptzylinder (104) des Absorbers mit einem Tropfenabscheiderabschnitt bereitgestellt ist, der nach dem Waschabschnitt (107) angeordnet ist, und der Tropfenabscheiderabschnitt zum Entfernen von Tropfen von Waschflüssigkeit aus dem behandelten Gasstrom angepasst ist.

7. System nach einem vorhergehenden Anspruch, wobei der Desorber (200) eine Dampfkammer (203) umfasst, und dass die Desorptionskammer (202) und die Dampfkammer (203) derart angeordnet sind, dass Absorptionsflüssigkeit (2,3) in der Desorptionskammer (202) und Wärmemedium (4,9) in der Dampfkammer nicht in dem Desorber gemischt werden.

8. System nach einem vorhergehenden Anspruch, wobei das System angepasst ist, um Absorptionsflüssigkeit (2,3) aus dem Desorber entlang der Rotationsachse des Desorptionszylinders zuzuführen und zu entfernen.

9. System nach einem der vorigen Ansprüche, das angepasst ist, um Dampfkondensat (9) aus dem Desorber entlang der Rotationsachse des Desorptionszylinders zu entfernen.

10. Prozess zur beschleunigten Absorption und Desorption von CO₂, umfassend die folgenden Schritte:
- Zuführen eines Gasstroms (10), der CO₂ enthält, zu einem Absorber (100) mit einem rotierenden Hauptzylinder (104),
- Sprühen von magerer Absorptionsflüssigkeit in den Gasstrom,
- Bewegen von Absorptionsflüssigkeitstropfen (113, 212) in einer Querströmungsrichtung zum Gasstrom mithilfe von Zentrifugalkraft, sodass die Richtung der Strömung von Absorptionsflüssigkeitstropfen (113, 212) im Wesentlichen orthogonal zur Richtung der Strömung des Gasstroms ist,
- Zerstäuben der Tropfen von Absorptionsflüssigkeit (113) durch ein Mittel zum Zerfall von Tropfen (111),
- Absorbieren von CO₂ aus dem Gasstrom (10) durch Absorptionsflüssigkeitstropfen (113),
- Zirkulieren von CO₂-reicher Absorptionsflüssigkeit (3) von dem Absorber zu einem rotierenden Desorber (200) mit einer Desorptionskammer (202), die mit einem rotierenden Wärmetauscher (207) bereitgestellt ist,
- Sprühen von CO₂-reicher Absorptionsflüssigkeit in die Desorptionskammer (202),
- Zuführen von Dampf (4) zum Wärmetauscher,
- Bewegen von Tropfen von Absorptionsflüssigkeit (212) durch Wärmetauscher (207) mithilfe von Zentrifugalkraft,
- Desorbieren von CO₂ aus Absorptionsflüssigkeit,
- Trennen von CO₂ von magerer Absorptionsflüssigkeit,
- Zirkulieren von magerer Absorptionsflüssigkeit (2) von dem Desorber (200) zum Absorber (100).

## Revendications

1. Système pour une absorption et une désorption accélérées de CO₂ comprenant un élément absorbant (100) destiné à absorber le CO₂ d'un flux de gaz (10) à l'aide de liquide d'absorption et d'un désorbeur (200) permettant de désorber le CO₂ d'un liquide d'absorption riche en CO₂, **caractérisé en ce que**
l'élément absorbant (100) comprend un cylindre principal rotatif (104) comportant une section d'absorption (105) dotée d'un moyen rotatif de désintégration de gouttelettes (111) d'un liquide d'absorption et d'un moyen de rotation (112) de l'élément absorbant (100), de manière que des gouttelettes de liquide d'absorption (113) sont déplacées à l'aide d'une force centrifuge dans une direction d'écoulement transversal par rapport au flux de gaz (10), de manière que la direction de l'écoulement des gouttelettes de liquide d'absorption (113) est sensiblement perpendiculaire à la direction de l'écoulement du flux de gaz (10), et étant atomisé par les moyens en vue de la désintégration de gouttelettes, moyennant quoi le CO₂ est absorbé du flux de gaz par les gouttelettes de liquide d'absorption,
le désorbeur (200) est relié à l'élément absorbant pour recevoir le liquide d'absorption riche en CO₂,
le désorbeur (200) est rotatif et comprend une chambre de désorption (202) dotée d'un échangeur thermique rotatif (207) et d'un moyen de rotation (205) du désorbeur, de manière que les gouttelettes de liquide d'absorption (212) sont déplacées à l'aide d'une force centrifuge à travers l'échangeur thermique (207) moyennant quoi les gouttelettes de liquide d'absorption sont chauffées et le CO₂ est désorbé et séparé des gouttelettes de liquide d'absorption, et un liquide d'absorption pauvre (2) est mis en circulation vers l'élément absorbant (100).

2. Système selon la revendication 1, dans lequel le moyen de désintégration de gouttelettes (111) comprend une pluralité de cylindres perforés rotatifs.

3. Système selon l'une quelconque des revendications précédentes, dans lequel le désorbeur est doté d'un moyen de récupération d'énergie cinétique (221) dans le liquide d'absorption pauvre (2) et/ou d'un condensat de vapeur (9) ;
le désorbeur étant doté de diffuseurs stationnaires (221) disposés dans une chambre de recueil d'élément absorbant (204) conçue pour convertir l'énergie cinétique dans le liquide d'absorption pauvre (2) en énergie hydrodynamique ; et/ou
le désorbeur étant doté de diffuseurs stationnaires (221) disposés dans une chambre à vapeur (203) pour convertir l'énergie cinétique dans un condensat de vapeur (9) en énergie hydrodynamique.

4. Système selon l'une quelconque des revendications précédentes, dans lequel le cylindre principal de l'élément absorbant comporte une section anti-buée (106) disposée après la section d'absorption (105) qui est conçue pour retirer des gouttelettes de liquide d'absorption (113) du flux de gaz traité.

5. Système selon l'une quelconque des revendications précédentes, dans lequel le cylindre principal (104) de l'élément absorbant comporte une section de lavage (107) disposée après la section anti-buée où le liquide de lavage est pulvérisé dans le flux de gaz, et doté d'une moyen de désintégration de gouttelettes (111), et les gouttelettes de liquide de lavage (119) sont déplacées à l'aide d'une force centrifuge dans une direction d'écoulement transversal par rapport au flux de gaz, de manière que la direction de l'écoulement de gouttelettes de liquide de lavage (119) est sensiblement perpendiculaire à la direction de l'écoulement du flux de gaz, moyennant quoi les gouttelettes du liquide de lavage absorbent le liquide d'absorption dissous dans le flux de gaz traité.

6. Système selon la revendication 5, dans lequel le cylindre principal (104) de l'élément absorbant est doté d'une section anti-buée qui est disposée après la section d'absorption (107), et la section anti-buée est conçue pour retirer des gouttelettes du liquide de lavage du flux de gaz traité.

7. Système selon l'une quelconque des revendications précédentes, dans lequel le désorbeur (200) comprend une chambre à vapeur (203), et que la chambre de désorption (202) et la chambre à vapeur (203) sont conçues de manière qu'un liquide d'absorption (2, 3) dans la chambre de désorption (202) et un moyen de chauffage (4, 9) dans la chambre à vapeur ne sont pas mélangés dans le désorbeur.

8. Système selon l'une quelconque des revendications précédentes, le système étant conçu pour fournir et retirer un liquide d'absorption (2, 3) du désorbeur le long de l'axe de rotation du cylindre de désorption.

9. Système selon l'une quelconque des revendications précédentes conçu pour retirer un condensat de vapeur (9) du désorbeur le long de l'axe de rotation du cylindre de désorption.

10. Procédé d'absorption et de désorption accélérées de CO₂ comprenant les étapes de :
- fourniture d'un flux de gaz (10) contenant du CO₂ à un élément absorbant (100) comportant un cylindre principal rotatif (104),
- pulvérisation d'un liquide d'absorption pauvre dans le flux de gaz,
- déplacement de gouttelettes de liquide d'absorption (113, 212) dans une direction d'écoulement transversal vers le flux de gaz à l'aide d'une force centrifuge de manière que la direction de l'écoulement de gouttelettes de liquide d'absorption (113, 212) est sensiblement perpendiculaire à la direction de l'écoulement du flux de gaz,
- atomisation des gouttelettes du liquide d'absorption (113) par les moyens en vue de la désintégration de gouttelettes (111),
- absorption de CO₂ du flux de gaz (10) par les gouttelettes de liquide d'absorption (113),
- mise en circulation de liquide d'absorption riche en CO₂ (3) de l'élément absorbant vers un désorbeur rotatif (200) comportant une chambre de désorption (202) dotée d'un échangeur thermique rotatif (207),
- pulvérisation d'un liquide d'absorption riche en CO₂ dans la chambre de désorption (202),
- fourniture de vapeur (4) à l'échangeur thermique,
- déplacement de gouttelettes de liquide d'absorption (212) à travers l'échangeur thermique (207) à l'aide d'une force centrifuge,
- désorption de CO₂ d'un liquide d'absorption,
- séparation de CO₂ d'un liquide d'absorption pauvre,
- mise en circulation d'un liquide d'absorption pauvre (2) du désorbeur (200) vers l'élément absorbant (100).
